(19) Europäisches Patentamt / European Patent Office / Office européen des brevets

(11) **EP 2 520 786 B1**

(12) **EUROPÄISCHE PATENTSCHRIFT**

(45) Veröffentlichungstag und Bekanntmachung des Hinweises auf die Patenterteilung:
**25.10.2017 Patentblatt 2017/43**

(51) Int Cl.:
*C10K 3/04* (2006.01)  *F01K 23/06* (2006.01)
*F02C 3/28* (2006.01)

(21) Anmeldenummer: **11008432.4**

(22) Anmeldetag: **30.08.2011**

(54) **IGCC-Kraftwerk mit einem Wasser-Gas-Shift-Membranreaktor (WGS-MR) sowie Verfahren zum Betreiben eines solchen IGCC-Kraftwerks mit Spülgas**

IGCC power plant with a water gas shift membrane reactor (WGS-MR) and method for operating such an IGCC power plant with flushing gas

Centrale IGCC dotée d'un réacteur catalytique membranaire (RCM) eau-gaz et procédé de fonctionnement d'une telle centrale IGCC à l'aide de gaz de rinçage

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.09.2010 DE 102010036056**

(43) Veröffentlichungstag der Anmeldung:
**07.11.2012 Patentblatt 2012/45**

(73) Patentinhaber: **Forschungszentrum Jülich GmbH 52425 Jülich (DE)**

(72) Erfinder:
• **Schiebahn, Sebastian**
  **52382 Niederzier (DE)**
• **Riensche, Ernst**
  **52428 Jülich (DE)**
• **Nazarko, Jewgeni**
  **52353 Düren (DE)**
• **Stolten, Detlef**
  **52076 Aachen (DE)**
• **Blum, Ludger**
  **52076 Jülich (DE)**

(56) Entgegenhaltungen:
WO-A2-2010/031366     DE-A1-102008 002 963
DE-A1-102008 011 771   JP-A- 6 137 114
US-A- 4 936 869       US-A1- 2007 072 949

• BRACHT M ET AL: "Water gas shift membrane reactor for CO2 control in IGCC systems: techno-economic feasibility study", ENERGY CONVERSION AND MANAGEMENT, ELSEVIER SCIENCE PUBLISHERS, OXFORD, GB, Bd. 38, Nr. 1001, 1. Januar 1997 (1997-01-01), Seiten S159-S164, XP004061592, ISSN: 0196-8904, DOI: 10.1016/S0196-8904(96)00263-4

**Beschreibung**

Die Erfindung betrifft ein Kraftwerk, insbesondere ein IGCC (Integrated Gasification Combined Cycle)-Kraftwerk, sowie ein Verfahren zum Betreiben desselben.

Stand der Technik

Die Kurzbezeichnung IGCC steht für Integrated Gasification Combined Cycle. IGCC-Kraftwerke sind Gas- und Dampfturbinen-Kraftwerke (GUD-Kraftwerk), denen eine Stufe zur Kohlevergasung vorgeschaltet wird. Bei der Kohlevergasung wird aus Kohle in einem Vergaser unterstöchiometrisch (λ ungefähr zwischen 0,2 und 0,4) ein brennbares Gas, das Wasserstoff und Kohlenmonoxid enthält, erzeugt. Mittlerweile können auch alternativ Raffinerie-Rückstände, Biomasse oder Abfall eingesetzt werden. Das Produktgas wird gereinigt und dem Gas- und Dampfturbinenprozess zugeführt. Mit diesem Verfahren lässt sich ein Wirkungsgrad von bis zu 60 Prozent und bei Restwärmenutzung ein solcher von bis zu 80 % erreichen. In einem zusätzlichen Schritt kann das bei diesem Prozess entstehende Kohlendioxid abgetrennt und einer Endlagerung zugeführt werden.

Der IGCC-Prozess ermöglicht zudem auf Grund des $CO_2$-Anteils und des hohen Gesamtdruckes die vergleichsweise einfache Kohlendioxid-Abscheidung (CCS = carbon capture and storage) vor dem eigentlichen Verbrennungsprozess. Dies ist ein wesentlicher Vorteil im Vergleich zu Techniken, bei denen das Kohlendioxid aus dem Rauchgas entfernt werden muss. Das Rauchgas enthält bei einer atmosphärischen Verbrennung über 80 Prozent Stickstoff, dessen Abtrennung erheblichen Aufwand bedeutet. Die IGCC-CCS Technologie kann damit einen wesentlichen Beitrag zur Senkung der Kohlendioxid-Emissionen und damit zur Verringerung des vom Menschen verursachten Treibhaus-Effektes beitragen.

Ein weiterer Vorteil der IGCC besteht in der Nutzung einer Gasturbine mit Generator, die aus der Verbrennung des Gases elektrische Energie erzeugt und der kombinierten Nutzung der Abwärme dieser Gasturbine in einer nachgeschalteten Dampfturbine. Systemwirkungsgrade von 50 bis 55 Prozent sind heute erreichbar und liegen deutlich über den 40 bis 45 Prozent eines normalen Kohlekraftwerks.

Kraftwerke dieser Bauart werden bisher in der Art betrieben, dass das im Vergasungsprozess erzeugte Gas nach der erforderlichen Gasreinigung unmittelbar als Brenngas dem GuD-Prozess zugeführt wird. In diesem GuD-Prozess wird dieses Brenngas in der Brennkammer der Gasturbine verbrannt und ein Teil der dem Gas anhaftenden Energie durch Entspannung in einem Turbinenprozess in mechanische Energie überführt. Die vorhandene fühlbare Wärme wird in einem anschließenden Dampfturbinenprozess verwertet. Die Konzentration an Kohlendioxid ($CO_2$) im Rauchgas dieses Prozesses ist gering. Sie liegt typischerweise unter 10 Vol.-%. Eine Abtrennung des $CO_2$ aus dem Rauchgas kann mit dem gleichen Verfahren durchgeführt werden, wie das bei den heute üblichen Dampfkraftwerken möglich ist. Dabei ist zu beachten, dass mit sinkender Konzentration an $CO_2$ im Rauchgas der technische Aufwand zur Abtrennung des $CO_2$ ansteigt. Der technische Aufwand zur Abtrennung des $CO_2$ hat einen negativen Einfluss auf den Wirkungsgrad des Verfahrens.

Eine Auftrennung des Brenngases in ein Brenngas, das keinen oder nur einen geringen Teil an Kohlenstoffverbindungen CO (Kohlenmonoxid) und $CO_2$ (Kohlendioxid) enthält, und einen Gasstrom, der ausschließlich oder überwiegend CO und $CO_2$ enthält (hohe Partialdrücken des $CO/CO_2$), ist für den Vorgang der Abtrennung des $CO_2$ und dessen Konditionierung für eine Endlagerung vorteilhaft.

Eine Möglichkeit ist es, aus einem modifizierten, mittels der Wassergas-Shift-Reaktion mit Wasserstoff angereichertem Brenngas eine Abtrennung des Wasserstoffs mit einem Wasserstofffilter zu bewirken. Dies führt zu einem Restgas, das, abhängig von der Verfahrensführung, einen so hohen Anteil an $CO_2$ enthält, dass das Restgas gegebenenfalls verflüssigt und somit für eine Endlagerung vorbereitet werden kann. Alternativ ist auch eine Verdichtung in den überkritischen Zustand denkbar.

Die Wassergas-Shift-Reaktion (kurz auch WGS) ist ein Verfahren, um in einem Synthesegas den CO-Anteil zu minimieren und gleichzeitig den $H_2$-Anteil zu erhöhen.

$$CO + H_2O \leftrightarrow CO_2 + H_2$$

$$\Delta H^0_{R298} = - 41{,}2 \text{ kJ/Mol}$$

Unter Zugabe von Wasserdampf reagiert das CO mit Hilfe eines Katalysators leicht exotherm zu $CO_2$ und $H_2$. Das Katalysatormaterial hängt vom Temperaturbereich und dem vorhandenen

Schwefelgehalt ab. Die Reaktion läuft in der Regel an einem Eisen(III)-oxid-Katalysator bei ca. 250 - 450 °C ab. Bei höherer Temperatur liegt eine schnelle Kinetik, aber ein ungünstiges chemisches Gleichgewicht vor. Bei niedrigen Temperaturen ist das Gleichgewicht stärker auf der rechten Seite der Reaktionsgleichung, aber die Kinetik nimmt ab. Um den Widerspruch bei kompakten Reaktoren zu lösen, wird die Shift-Reaktion oft zweistufig in einer Hochtemperatur- und Niedertemperatur-Shiftstufe (kurz: HT- und NT-Shift) durchgeführt. Der CO-Gehalt lässt sich so je nach Fahrweise, insbesondere in Abhängigkeit vom Wassergehalt und der Temperatur des Reaktors, auf 0,6 bis 1,5 Vol.-% absenken.

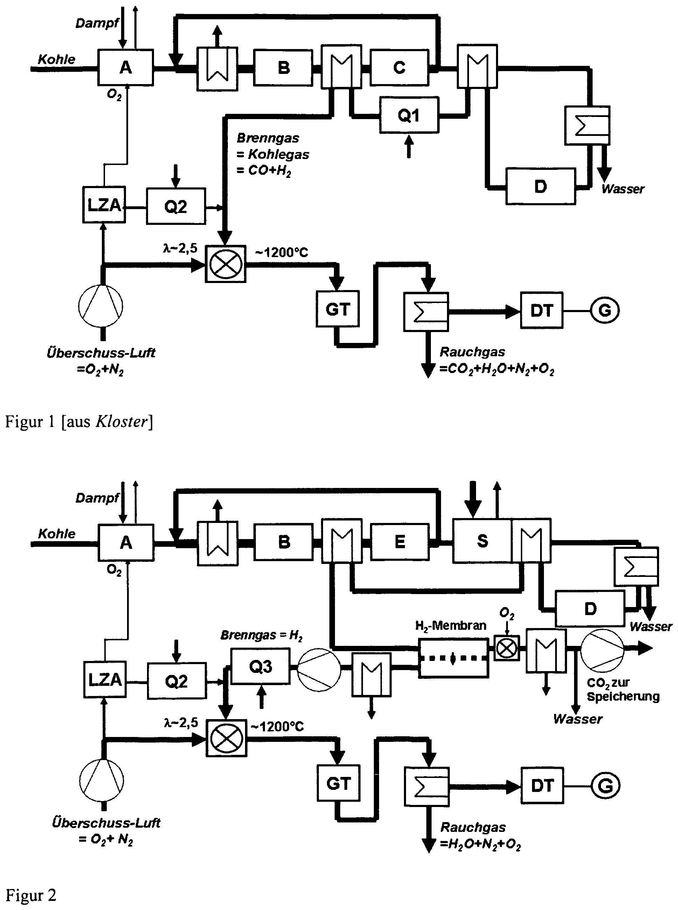

Derzeit sind die nachfolgend aufgeführten Konzepte für ein IGCC-Kraftwerk mit entsprechender $CO_2$-Abtrennung bekannt, die durch die Figuren 1 bis 5 schematisch dargestellt sind.

Die Figur 1 liefert eine Darstellung eines IGCC-Kraftwerks nach [*Kloster* 1999], wie es bereits heute existiert: Die Vergasung der Kohle mit Sauerstoff und Dampf erfolgt bei ca. 1300 °C bis 1600 °C. Die Rohgasrückführung wird zur Kühlung des Kohlegases auf ca. 900 °C (zur Erstarrung der flüssigen Aschepartikel) verwendet. Eine weitere Abkühlung auf 450 °C kann durch weitere Dampfproduktion bewirkt werden. Die Entstaubung des Brenngases erfolgt in der Regel durch einen oder mehrere Zyklone. Weitere Wärmeaustauscher (WT) dienen der Abkühlung bevor das Kohlegas zum Venturiwäscher gelangt, wo es zur Abscheidung von restlichen Festkörpern und sauren Komponenten, wie HCl kommt. Vor der Entschwefelung erfolgt in der Regel eine weitere Abkühlung auf ca. 40 °C.

Im Anschluss wird das gereinigte Kohlegas nunmehr wieder durch Wärmetauscher vorgewärmt, mit Wasser in einem Sättiger gesättigt, um die NOx-Produktion (NOx = Sammelbezeichnung für die gasförmigen Oxide des Stickstoffs, insbesondere Stickoxide, Nitrose Gase oder Stickstoffoxide) bei der Verbrennung zu reduzieren, und weiter bis auf ca. 350 °C aufgeheizt, bevor es in die Brennkammer der Gasturbine eingeleitet wird.

Es erfolgt eine Zugabe von gesättigtem Stickstoff aus einer Luftzerlegungsanlage (Luftzerlegungsanlage), die auf Grund der Verdünnung des Brenngases zu einer NOx-Reduktion führt.

Der GuD-Prozess wird zur Temperaturbegrenzung innerhalb der Brennkammer in der Regel mit einem hohen Luftüberschuss ($\lambda \sim 2,5$) gefahren. Die Temperaturbegrenzung wird derzeit aus materialtechnischen Gründen bei ca. 1250 °C festgelegt. Es folgt die Verbrennung des Kohlegases in der Brennkammer und die Entspannung in der Gasturbine auf atmosphärischen Druck. Im Abhitzekessel wird die Restabwärme zur Dampfproduktion genutzt. Das nun vorliegende Abgas aus der Gasturbine wird mit ca. 75 °C über den Kamin in die Atmosphäre geleitet.

Bei dem in Figur 2 dargestellten Konzept handelt es sich um ein IGCC-Kraftwerk mit $CO_2$-Abtrennung (CCS), wobei aus dem Kohlegas $H_2$ als Brenngas durch eine Membran abgetrennt wird. Die Gasreinigung erfolgt wie beim Basis-IGCC. Die Triebkraft für die $H_2$-Abtrennung in dem $H_2$-Membranfilter wird durch einen Unterdruck, beispielsweise mittels Vakuumsauger, erzeugt. Das im Retentat des Membranfilters verbleibende Brenngas aus $CO_2$ und restlichem, nicht abgetrennten $H_2$ wird katalytisch nachverbrannt und abgekühlt, bevor es einer $CO_2$-Speicherung zugeführt wird.

Das Permeat wird zunächst abgekühlt, auf Brennkammerdruck verdichtet, wobei es sich wieder erhitzt, und mit Wasser gesättigt, bevor es in die Brennkammer der Gasturbine eingeleitet wird.

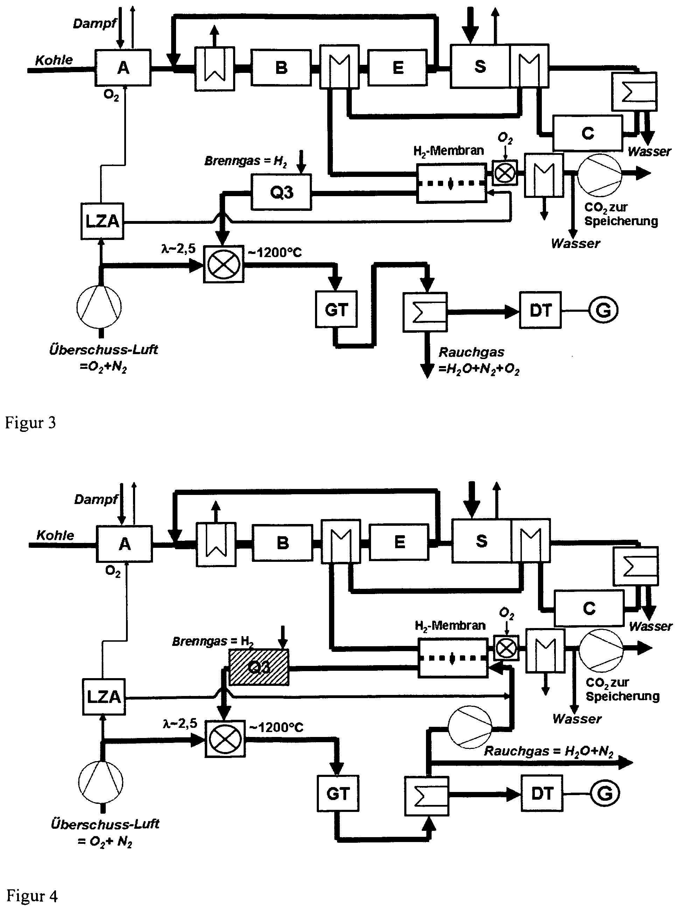

Die Figur 3 zeigt ein IGCC- Kraftwerk mit $CO_2$-Abtrennung (CCS) und $H_2$-Abtrennung durch eine $H_2$-selektive Membran, wie in Figur 2 dargestellt. In diesem Fall wird aber die Triebkraft für die $H_2$-Abtrennung in dem Membranfilter nicht durch Vakuum, sondern durch ein Spülgas aus einer Luftzerlegungsanlage (LZA) erzeugt. Die Stoffmenge an $N_2$-haltigem Spülgas wird dabei in der Regel durch den $O_2$-Bedarf für die Vergasung vorgegeben.

Die Gasreinigung erfolgt wie beim Basis-IGCC. Das im Retentat des Membranfilters verbleibende Brenngas wird wiederum katalytisch nachverbrannt, abgekühlt und anschließend einer $CO_2$-Speicherung zugeführt.

In diesem Fall kann vorteilhaft auf die Kühlung und die Rekompression des Permeats verzichtet werden, da das Spülgas mit dem abgetrennten $H_2$ schon unter Normaldruck vorliegt. Lediglich die Sättigung mit Wasser (Sättiger) wird vor der Einleitung in die Brennkammer der Gasturbine vorgeschaltet. Innerhalb des $H_2$-Membranfilters fällt auf Grund des nahezu identischen Drucks auf der Retentat- und der Permeatseite die Triebkraft für die $H_2$-Abtrennung deutlich geringer aus, so dass als Kompensation eine extrem große Membranfläche eingesetzt werden muss. Vorteilhaft ist jedoch, dass durch die Möglichkeit auf beiden Seiten der Membran den gleichen Druck der Gase einzustellen, die $H_2$-selektive Membran selbst dünner und stabiler ausgestaltet werden kann und es in der Regel weniger Probleme mit der Dichtigkeit gibt.

In der Figur 4 ist eine Weiterentwicklung des IGCC- Kraftwerks aus Figur 3 dargestellt, wie sie auch in DE 102008011771 A1 offenbart ist. Neben dem Stickstoff aus der Luftzerlegungsanlage wir hierbei zusätzlich und hauptsächlich das Rauchgas aus der Gasturbine als Spülgas im $H_2$-Membranfilter eingesetzt. Dies bietet folgende Vorteile:

- Die Rauchgasrezirkulation führt zu einer erheblichen NOx-Minderung (NOx = Sammelbezeichnungen für die gasförmigen Oxide des Stickstoffs, insbesondere Stickoxide, Nitrose Gase oder Stickstoffoxide). Sie werden auch mit $NO_x$ abgekürzt.
- Die Brennkammer der Gasturbine kann nunmehr mit einem deutlich reduzierten Sauerstoffgehalt (von $\lambda \sim 2,5$ auf $\lambda \sim 1$) betrieben werden, was zu erheblich weniger NOx führt.
- Zudem enthält das zurückgeführte Rauchgas bereits viel Wasser, welches Temperaturspitzen reduziert und insbesondere auf Grund seines Verdünnungseffektes hemmend auf die NOx-Bildung wirkt. Entstandenes NOx wird ebenfalls zurückgeführt und wirkt als bereits entstandenes Produkt hemmend auf die weitere Bildung von neuem NOx.

Ferner kann an dieser Stelle auf einen Sättiger, bzw. Quencher komplett verzichtet, oder zumindest in seiner Funktionsweise stark reduziert werden, was zu einer erheblichen Wirkungsgradsteigerung führt (in Figur 4 nur schraffiert dargestellt, da optional).

Durch die Bereitstellung des Spülgases aus einer internen Quelle kann als Sauerstoffquelle vorteilhaft auch etwas anderes als eine Luftzerlegungsanlage vorgesehen werden, beispielsweise eine $O_2$-Membran oder ein Chemical Looping Verbrennungssystem. Bislang war man auf den Stickstoff aus der Luftzerlegungsanlage als Spülgas für die Membran angewiesen.

Anders als in DE 102008011771 A1, wo das Abgas der Brennkammer der Gasturbine direkt als Spülgas eingesetzt wird, wird in WO 2010/031366 A2 als Spülgas das Verbrennungsprodukt der Gasturbine nach Durchlaufen des Abhitzekessels eingesetzt. An dieser Stelle liegt das Verbrennungsprodukt drucklos vor und weist eine niedrige Temperatur auf.

Die Vor- und Nachteile einer bei annähernd gleichem Druck betriebenen Membran wurden schon in den Ausführungen zur Figur 3 dargestellt.

Insgesamt führt die Rauchgasrückführung zu weniger Abgas und damit zu weniger abgeführter Wärme, was ebenfalls den Wirkungsgrad erhöht.

Es hat sich zudem herausgestellt, dass durch die überproportionale Steigerung der Triebkraft für das $H_2$ im Vergleich zum $N_2$ bei gleichem $H_2$-Abtrenngrad die Rückpermeation des $N_2$ verringert wird, so dass das Retentat reiner wird. Sofern eine hohe Reinheit der begrenzende Faktor ist, kann insofern auch der maximale Abtrenngrad erhöht werden.

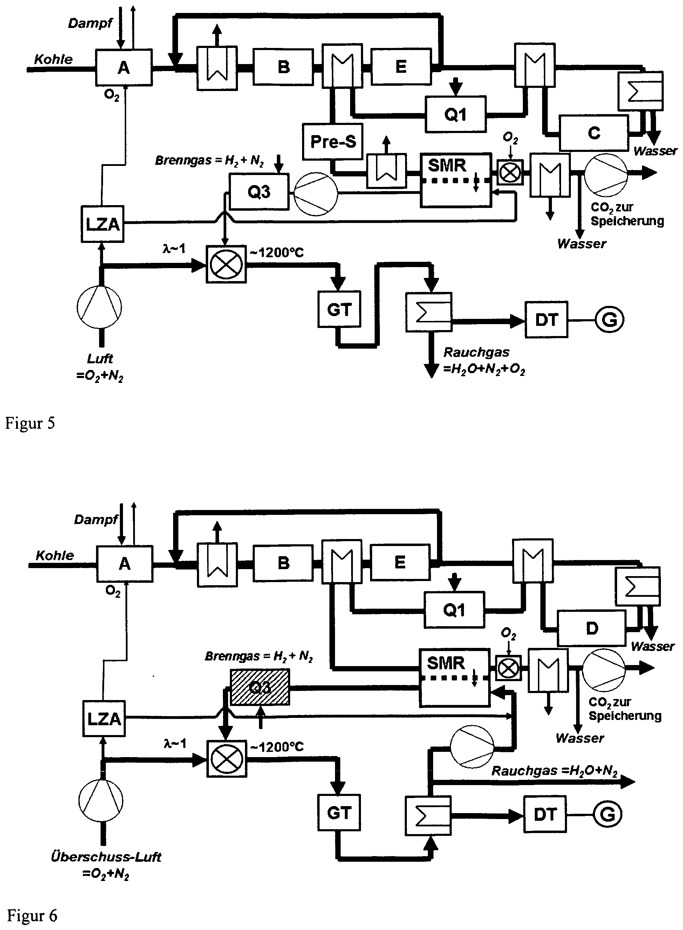

Eine weitere Ausgestaltung eines IGCC-Kraftwerks mit $CO_2$-Abtrennung und -Speicherung ist das in der Figur 5 wiedergegebene vorliegende Konzept mit einem so genannten Wassergas-Shift-Membranreaktor (WGS-MR = Water Gas Shift Membrane Reactor), wie es ansatzweise in [*Bracht et al. 1997*] oder [*Carbo et al. 2006*] beschrieben wird.

Dabei wird zwischen einem einstufigen, isothermen und einem zweistufigen, adiabatischen Wassergasshift-Membranreaktor mit $H_2$-selektiver Membran unterschieden. Prinzipiell ist der Einbau eines Wassergas-Shift-Membranreaktors in ein IGCC-Kraftwerk aufwändig, da die Rahmenbedingungen, wie beispielsweise die Einlass- und Auslassströme bezüglich ihrer Mengenströme und Temperaturen, exakt optimiert werden müssen.

Vom technischen Standpunkt aus bietet der zweistufige Wassergas-Shift-Membranreaktor einige Vorteile und ist daher in der Figur 5 dargestellt. Eine Shiftstufe vor der Entschwefelung ist nicht vorgesehen. Dafür wird das gereinigte Gas zunächst in einem Sättiger mit Wasser gesättigt. Die Sättigung vor dem WGS-MR, bzw. dem Shiftreaktor, dient der Einstellung des $H_2O$/CO-Verhältnisses, welches wichtig für das chemische Gleichgewicht der Shiftreaktion ist. Bei normaler Shift (ohne Membran) wird üblicherweise ein Verhältnis von 2 oder höher gewählt, um ausreichende CO-Umwandlung zu gewährleisten. Bei WGS-MR kann das Verhältnis auf 1,3 gesenkt werden. Niedrigere Verhältnisse werden nicht angestrebt, da bei zu niedrigem Wassergehalt die Gefahr von Russbildung besteht. Je weniger Dampf an dieser Stelle benötigt wird, desto effektiver verläuft der Prozess, und desto höher fällt der Wirkungsgrad aus.

In der ersten Hochtemperatur Pre-Shiftstufe erfolgt die hauptsächliche Umsetzung in $CO_2$ und $H_2$, wobei auch der Großteil der dabei entstehenden Wärme anfällt. Diese wird durch einen direkt nachgeschalteten Wärmetauscher wieder entzogen. In der zweiten Shiftstufe, dem eigentlichen Membranreaktor, erfolgt dann die weitere Umsetzung entsprechend dem thermodynamischen Gleichgewicht. Dieses wird durch die permanente Abtrennung des $H_2$ aus der Reaktionszone durch die $H_2$-selektive Membran vorteilhaft auf die Eduktseite verschoben. Die dabei auftretende Temperaturerhöhung fällt dabei moderat aus. Unter diesen Rahmenbedingungen sollte zudem die $H_2$-selektive Membran eine lange Lebensdauer aufweisen.

Vorteilhaft ist diese Ausgestaltung dieses Konzeptes auch deshalb, weil die beiden Prozessstufen selbst keine aufwändigen Vorrichtungen darstellen und zudem adiabatisch betrieben werden können, d. h. der notwendige Wärmetransport erfolgt nicht aufwändig innerhalb der Reaktoren, sondern außerhalb an Zuführungsleitungen.

Eine 2-stufige Shiftstufe ist auch aus US 2007/0072949 A1 zu entnehmen, wo zur Erzeugung von Wasserstoffgas das Synthesegas zunächst eine Syngas-Reinigungstufe durchläuft. Diese umfasst eine Hochtemperatur-Shiftstufe (engl. hight temperature shift, HTS) und eine Niedertemperatur-Shiftstufe (engl. low temperature shift, LTS). Aus dem Gas werden im Anschluss $H_2S$ und $CO_2$ einzeln abgetrennt, bevor über eine sich anschließende Druckadsorptionsstufe (engl. pressure swing adsorption, PSA) das reine $H_2$-Gas vom restlichen Brenngas abgetrennt werden kann. Der 6-stufige Synthesegas-Reinigungsprozess kann auch in einem einzigen Reaktor durchgeführt werden, wobei neben einem Wassergas-ShiftReaktor eine aktive Kühlung sowie eine Hochtemperaturmembran vorgesehen sind.

In DE 10 2008 002 963 A1 wird ferner ein Polygenerationssystem beschrieben, in welchem beispielsweise ein Synthesegas erzeugt und unter anderem über mehrere Stufen angereichert, bzw. gereinigt wird (Synthesgasanreicherungseinheit). Dabei wird als eine mögliche Ausführungsvariante ein Wassergas-Shift-Membranreaktor als Teil der Synthesgasanreicherungseinheit erwähnt, wobei die bei der exothermen Reaktion erzeugte Wärme entsprechend abgeführt wird.

In der US 4,936,869 wird ebenfalls ein Polygenerationssystem beschrieben, bei dem zumindest ein Teil des in einer Kohlevergasung erzeugten und anschließend gereinigten Synthesegases über eine Shiftstufe zusammen mit Stickstoff aus einer Luftzerlegungsanlage zur Erzeugung von flüssigem Wasserstoff eingesetzt wird.

Bei der in [*Bracht et al. 1997*] durchgeführten Machbarkeitsstudie wird auch die ebenfalls erwähnte einstufige, isotherme Auslegung eines Wassergas-Shift-Membranreaktors untersucht. Dabei wird eine Druckdifferenz von mindestens 15 bar über die Membran angenommen, da sonst die Triebkraft für die $H_2$-Abtrennung zu gering ausfällt. Die optimale Eingangstemperatur am WGS-MR wird mit 325 °C angegeben.

Wie jedoch schon durch [*Kreutz et al. 2002*] gezeigt werden konnte, verläuft die WGS-Reaktion bei diesen Temperaturen derart schnell, dass die Hauptreaktion und die Wärmeumsetzung innerhalb der ersten 20 % der Reaktorlänge vonstatten geht, bevor bei der vorliegenden Triebkraft eine signifikante Menge an $H_2$ durch die Membran permeieren kann. Daher verhält sich der erste Teil des Reaktors im Prinzip wieder wie ein üblicher adiabatischer WGS-Reaktor, und kann daher besser als eigenständige Pre-Shiftstufe ausgestaltet werden.

Bei [*Carbo et al. 2006*] wird alternativ auch ein IGCC-Kraftwerk mit einem Wassergasshift-Membranreaktor mit einer $CO_2$-selektiven Membran untersucht.

In dem Übersichtsartikel von [*Chiesa et al. 2005*] werden verschiedene IGCC-Kraftswerksmodelle mit unterschiedlichen $CO_2$-Abtrennverfahren vorgestellt und miteinander verglichen. Das Basismodell weist dabei eine adiabatische Wassergas-Shiftstufe auf, in der der Hauptanteil an CO in $CO_2$ und $H_2$ umgewandelt wird. Dem schließt sich eine WGS-Membran an, in dem weiterhin ein Shiftprozess stattfindet, und gleichzeitig $H_2$ durch eine $H_2$-selektive, dichte metallische Membran abgetrennt und zusammen mit $N_2$ als Spülgas der Gasturbine zugeführt wird. Da die Triebkrafterzeugung durch die Menge an LZA-Spülgas in der Regel nicht ausreicht, wird zudem das Druckniveau auf der Permeat-/Spülgasseite reduziert, wodurch nachteilig eine anschließende Abkühlung der Gase und Rekompression erforderlich ist.

## Aufgabe und Lösung

Aufgabe der Erfindung ist es, ein IGCC-Kraftwerk zur Verfügung zu stellen, bei dem die Umwandlung des CO und die Abtrennung des $H_2$ durch einen Wassergasshift-Membran-reaktor (WGS-MR) umgesetzt werden, der adiabat (d. h. ohne zusätzliche Wärmeabfuhr innerhalb des Reaktors) und einstufig (d. h. ohne Zwischenprozessstufen, die eine Kühlung oder erneute Dampfzufuhr beinhalten) betrieben werden kann. Dies würde eine erhebliche bautechnische Vereinfachung erlauben.

Ferner ist es die Aufgabe der Erfindung, die durch die Shiftreaktion entstehende Wärme zu einem größtmöglichen Anteil direkt zu Gasturbine zu fördern, damit diese im GuD-Prozess genutzt werden kann, was zu einem deutlich erhöhten Wirkungsgrad des Gesamtprozesses führen würde.

Ferner sollte dabei vorteilhaft ein unter Druck stehendes, fast ausschließlich aus $CO_2$ bestehendes Abgas erzeugt werden, welches mit nur wenig Aufwand abgetrennt werden kann.

Des Weiteren ist es die Aufgabe der Erfindung, ein Verfahren zum Betreiben eines solchen IGCC-Kraftwerks mit einem WGS-MR zur Verfügung zu stellen, welches die vorgenannten Vorteile aufweist.

Die Aufgaben der Erfindung werden gelöst durch ein IGCC-Kraftwerk mit der Gesamtheit an Merkmalen gemäß Hauptanspruch, sowie durch ein Verfahren zum Betreiben desselben gemäß Nebenanspruch. Vorteilhafte Ausgestaltungen des Kraftwerkes bzw. des Verfahrens finden sich in den jeweils rückbezogenen Ansprüchen.

## Gegenstand der Erfindung

Im Rahmen der Erfindung wurde herausgefunden, dass ein IGCC-Kraftwerk mit einer Rauchgasrückführung (siehe die Ausführungen zu Figur 4) in Kombination mit einem Wassergas-Shift-Membranreaktor (siehe die Ausführungen zu Figur 5) anstelle von mehrstufigen Shiftreaktoren, nicht nur die jeweiligen Vorteile der jeweiligen bereits bekannten Konzepte aufweist, sondern darüber hinaus auch noch weitere zusätzliche Vorteile eröffnet.

Die Erfindung weist gegenüber einem IGCC-Kraftwerk mit reiner Rauchgasrückführung gemäß Figur 4 den Unterschied auf, dass auf die Shiftstufe vor der Entschwefelung verzichtet werden kann. Dafür muss das gereinigte Gas vor dem Eintritt in den Wassergasshift-Membranreaktor zuvor in einem Sättiger mit Wasser gesättigt werden, wie es auch schon bei dem IGCC-Kraftwerk mit Shift-Membranreaktor aus der Figur 5 bekannt ist.

Gegenüber dem Kraftwerk gemäß Figur 5 wird bei der Erfindung auf die Hochtemperatur Pre-Shiftstufe und den sich daran anschließenden Wärmetauscher vor dem Wassergas-Shift-Membranreaktor komplett verzichtet. Zudem sind im Vergleich zu dem Kraftwerk gemäß Figur 5 darüber hinaus auf der Permeatseite vorteilhaft der Wärmetauscher und der Nachverdichter für das Spülgas entbehrlich.

Als Nachteil wurde bislang bei der einstufigen Auslegung eines Wassergas-Shift-Membranreaktors ausgeführt:

- die notwendige Druckdifferenz von mindestens 15 bar über die Membran, damit eine ausreichende Triebkraft für die $H_2$-Abtrennung sichergestellt werden kann,
- die Hauptreaktion und die Wärmeumsetzung, die innerhalb der ersten 20 % der Reaktorlänge vonstatten geht, bevor bei der vorliegenden Triebkraft eine signifikante Menge an $H_2$ durch die Membran permeieren kann.

Diese Nachteile können durch die Erfindung jedoch vorteilhaft überwunden werden. Hier wird der Effekt ausgenutzt, dass durch die Rauchgasrückführung verglichen mit der $H_2$-Menge eine große Spülgasmenge zur Verfügung steht.

Im Rahmen dieser Erfindung wird festgelegt, dass als Rauchgas das sowohl direkt aus der Brennkammer der Gasturbine austretende Abgas gemeint ist, als auch solches, welches sich nach einer Entspannung in der Gasturbine als Abgas ergibt. Bei einer der Gasturbine nachgeschalteten Dampfturbine (GuD) wird als Rauchgas auch das Abgas verstanden, welches nach einen Abhitzekessel für eine Dampfturbine aus dem System ausgeschleust wird.

Es wird ferner festgelegt, dass unter einem Wassergas-Shift-Membranreaktor im Rahmen dieser Erfindung ein Bauteil verstanden werden soll, in welchem sowohl die Shiftreaktion als auch die $H_2$-Abtrennung stattfindet. Dabei kann es aus bautechnischen Gründen vorteilhaft sein, einen Abschnitt innerhalb des Wassergas-Shift-Membranreaktors für eine reine Shift-reaktion vorzusehen, um Materialbelastungen, wie beispielsweise thermomechanische Spannungen, zu minimieren. Ein solcher Abschnitt könnte beispielsweise der Eingangsbereich des Wassergas-Shift-Membranreaktors sein, der noch nicht unmittelbar mit der verwendeten Membran in Verbindung steht, und so diese vor allzu hohen Temperaturspitzen schützt.

In einer vorteilhaften Ausführung der Erfindung wird zunächst das gesamte Abgas aus der Brennkammer der Gasturbine zugeführt und im Anschluss zu einer Dampfturbine weitergeleitet. Nach einer Abkühlung im Abhitzekessel für den Dampfturbinenprozess wird dann das abgekühlte Abgas als Spülgas der Permeatseite des Wassergas-Shift-Membranreaktors zugeleitet.

Eine große Menge an Spülgas bedeutet aber, dass nunmehr keine signifikante Druckdifferenz an der Membran eingestellt werden muss, um eine ausreichende Triebkraft sicherzustellen. Diese Tatsache bewirkt, dass für die Auswahl an geeigneten Materialien für die Membran nunmehr vorteilhaft auf solche Materialien zurückgegriffen werden kann, die bislang aufgrund ihrer ungenügenden Stabilität häufig nicht in Frage kamen. Das führt regelmäßig zu einem stark reduzierten bautechnischen Aufwand, bei dem auf stabilisierende Elemente entweder komplett verzichtet oder aber diese zumindest nur eingeschränkt berücksichtigt werden müssen.

Die erhöhte Triebkraft durch die Rauchgasrückführung führt in der Regel zu einem sehr schnellen Abzug des $H_2$ aus der Reaktionsmischung und damit zu einer positiven Beeinflussung der gleichgewichtsgetriebenen Shiftreaktion hin zur Produktseite, d. h es bewirkt vorteilhaft eine erhöhte CO Umsetzung zum $CO_2$. Theoretisch wären damit $H_2$-Abtrenngrade und folglich auch CO-Umsetzungen bis hin zu 100 % möglich, da das im Gegenstrom eintretende Spülgas zunächst noch kein $H_2$ enthält.

Gleichzeitig bedeutet eine hohe Triebkraft aber auch, dass die notwendige Membranfläche vorteilhaft reduziert werden kann, also der Reaktor selbst bautechnisch kleiner dimensioniert werden kann.

Ein besonders wichtiger synergetischer Effekt der erfindungsgemäßen Kombination in dem IGCC-Kraftwerk liegt darin, dass die große Menge an Rauchgas als Spülgas gleichzeitig zum fast vollständigen Abtransport der durch die Shiftreaktion anfallenden Wärme eingesetzt werden kann, so dass es innerhalb des Wassergas-Shift-Membranreaktors regelmäßig nur zu einer geringen Temperaturerhöhung kommt. Damit bleibt das Shift-Gleichgewicht auf der günstigen Seite.

Dadurch, dass diese Wärme direkt auf das Spülgas übertragen und anschließend direkt dem GuD-Prozess zugeführt wird, kann vorteilhaft der Wirkungsgrad des gesamten Systems erhöht werden, da diese Wärmenutzung effektiver als eine weitere Dampferzeugung ist, wie sie beispielsweise bei dem Kraftwerk gemäß Figur 5 aus dem $CO_2$-haltigen Abgas erfolgt.

Erfindungsgemäß wird im WGS-MR der Wasserstoff abgetrennt und das $CO_2$ verbleibt im Retentat. Zur Einsparung von Kompressionsenergie kann das $CO_2$ bei der Abtrennung vorteilhaft auf dem erhöhten Druckniveau bleiben.

Das Permeat, welches das abgetrennte $H_2$ enthält, weist vorteilhaft nach der Abtrennung einen Gesamtdruck auf, der hoch genug ist, damit es ohne weitere Kompression in die Gasturbine eingespeist werden kann. Die Notwendigkeit einer Kompression des Permeats hätte nachteilig zur Folge, dass dieses vorher abgekühlt werden müsste, was zu zusätzlichen Bauteilen (Wärmetauscher, Kompressor) und zudem zu einer Verschlechterung des Wirkungsgrades führen würde. Bekanntermaßen ist die Kompression heißer Gase sehr aufwendig, teuer und nur begrenzt möglich.

Bei der Erfindung wird auch weniger Dampf für die Shiftreaktion benötigt, insbesondere im Vergleich gegenüber den Versionen ohne WGS-MR, da das Gleichgewicht der Shiftreaktion hier durch den verstärkten Abzug von $H_2$ anstelle von mehr Edukt in Form von Dampf verschoben wird. Auch insofern kann auf zusätzliche Dampferzeugung verzichtet werden, was den Gesamtwirkungsgrad des Kraftwerkes ebenfalls positiv beeinflusst.

Das theoretische Minimum für den Dampfanteil ist das stöchiometrische Minimum von $H_2O/CO = 1$. Je nach Temperaturbereich und Katalysator kann es jedoch dabei zu einer Rußbildung innerhalb des Reaktors kommen, so dass das tatsächliche Verhältnis üblicherweise etwas höher eingestellt wird. In der Regel wird ein minimales Verhältnis zwischen 1,3 und 1,6 eingestellt. Das genaue minimale Verhältnis kann im Einzelfall experimentell überprüft werden.

Da das Spülgas, welches erfindungsgemäß die überwiegende Menge der Wärme der Shiftreaktion aufnimmt und damit mit einer erhöhten Temperatur vorliegt, nunmehr nicht in dem Maße wie bisher zur Temperatureinstellung innerhalb der Brennkammer der Gasturbine genutzt werden kann, ist insgesamt mehr Spülgas als bei der Ausführung gemäß Figur 4 vorgesehen.

Dies führt einerseits zu einer weiteren Erhöhung der Triebkraft innerhalb des Membranreaktors und gleichzeitig zu einem erhöhten Massenstrom durch die Gasturbine und den Abhitzekessel, was im Ergebnis mehr Strom bedeutet.

Die Steigerung der Triebkraft ist dabei so groß, dass sogar eine höhere Betriebstemperatur in Kauf genommen werden kann. Eine höhere Temperatur innerhalb des Membranreaktors hätte den Vorteil, dass auch der Einsatz von Mischleitern ermöglicht würde, die in der Regel erst bei höheren Temperaturen oberhalb von 500 °C funktionieren, d. h. eine ausreichende Leitfähigkeit aufweisen. Höhere Temperaturen würden zwar zu einer Verlagerung des Gleichgewichts der Shiftreaktion auf die Eduktseite führen, dieser nachteilige Effekt würde aber durch eine kontinuierliche $H_2$-Abtrennung kompensiert werden können.

Im vorliegenden Fall der Erfindung konnte gezeigt werden, dass die Triebkraft, das $H_2$ abzutrennen, so stark ist, das der nachteilige Effekt der Gleichgewichtsverschiebung durch die Temperaturerhöhung mehr als kompensiert wird und auch ein Wassergas-Shift-Membran-reaktor bei hohen Temperaturen, das bedeutet bei mehr als 500 °C, effektiv betrieben werden kann.

Eine vorteilhafte Ausgestaltung der Erfindung sieht vor, dass der WGS-MR so integriert wird, dass er mit ausgeglichenen Drücken (p(Feed) = p(Spülgas)) betrieben werden kann.

Die vorliegende Erfindung löst die Aufgabe, dass in ein IGCC ein WGS-MR integriert wird, der adiabat und einstufig betrieben werden kann, und bei dem die Reaktionswärme nahezu vollständig und auf direktem Wege zur Gasturbine transportiert werden kann.

Es wurde überraschend herausgefunden, dass der Temperaturverlauf innerhalb des WGS-MR entscheidend durch das Verhältnis der thermischen Massenströme der Feed- und der Permeatseite beeinflusst wird. Dabei wird hier unter dem thermischen Massenstrom das Produkt aus molarer Wärmekapazität $C_{mol,p}$ [J mol$^{-1}$ K$^{-1}$], die auf die Stoffmenge bezogen wird, und Gesamtmolstrom $n$ verstanden. Dabei ist der Strom mit dem höheren thermischen Massenstrom immer dominant für die Ausprägung des Profils.

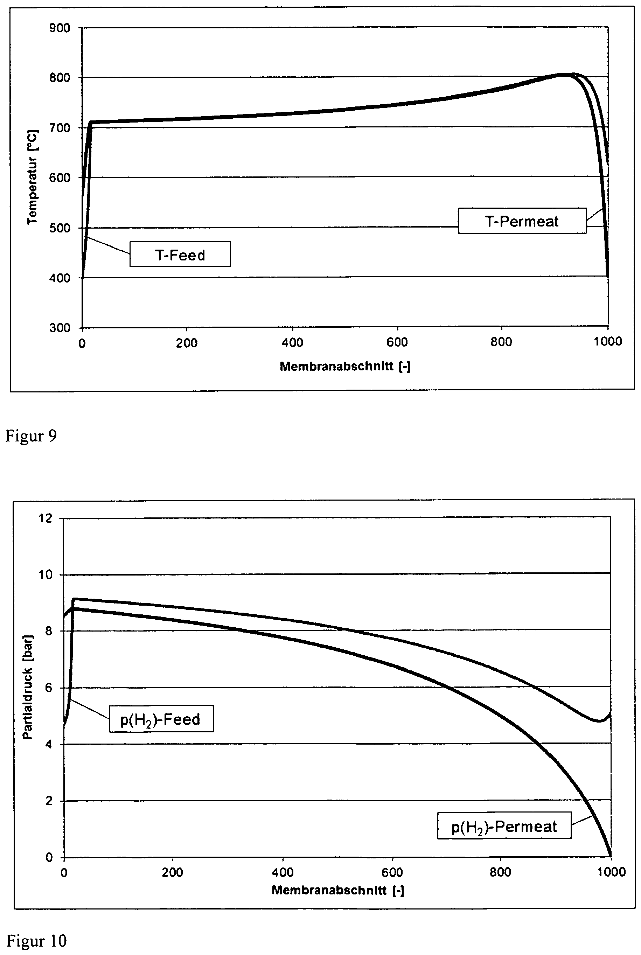

Bei einem Spülgasstrom, dessen thermischer Massenstrom kleiner oder gleich dem thermischen Massenstrom der Feedseite ist, wird das T-Profil innerhalb des WGS-MR durch die Shiftreaktion auf der Feedseite bestimmt. Aufgrund des dominanten Charakters des Feedstroms bleibt die Wärme im Feedstrom und diese erhöht sich zunehmend, um mehrere 100 K, wie in Figur 9 (Beispiel: Fall 3) dargestellt ist. Dort ist auch zu erkennen, dass sich innerhalb des Reaktors eine deutlich höhere Temperatur einstellt, als die Temperaturen der Ausgangsströme.

Die starken Temperaturänderungen finden am Anfang des WGS-MR aufgrund der Shiftreaktion und am Ende des WGS-MR auf Grund der Aufwärmung des Spülgases statt. Wie zu erkennen ist, bleibt ein großer Teil der entstandenen Reaktionswärme im Retentat und ist für den GuD-Prozess verloren.

Spezieller Beschreibungsteil

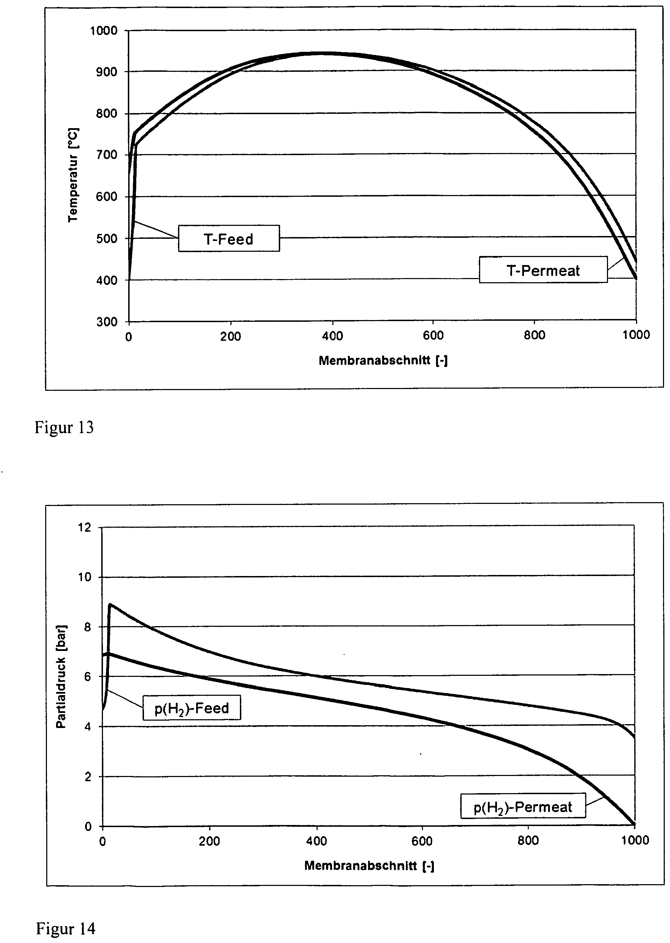

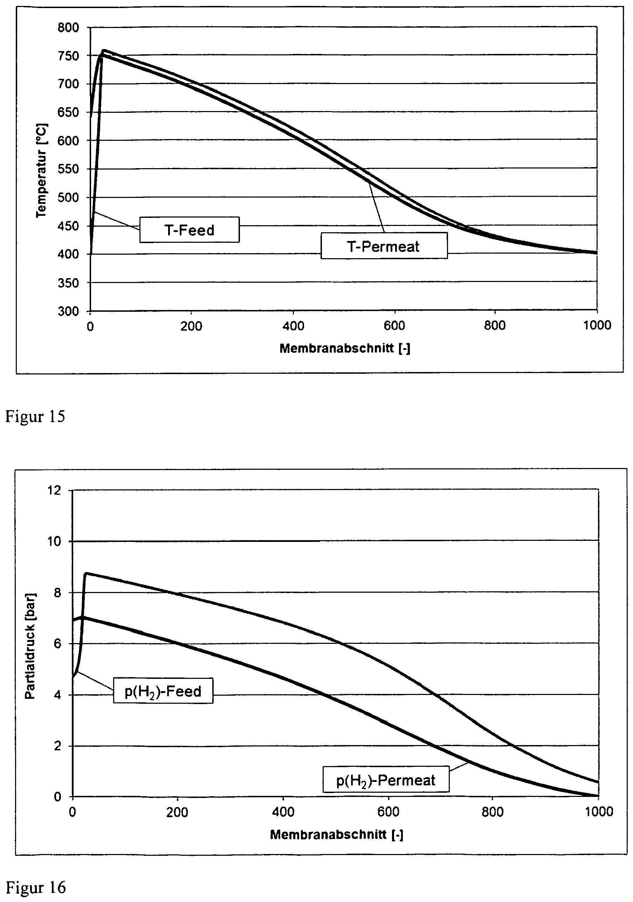

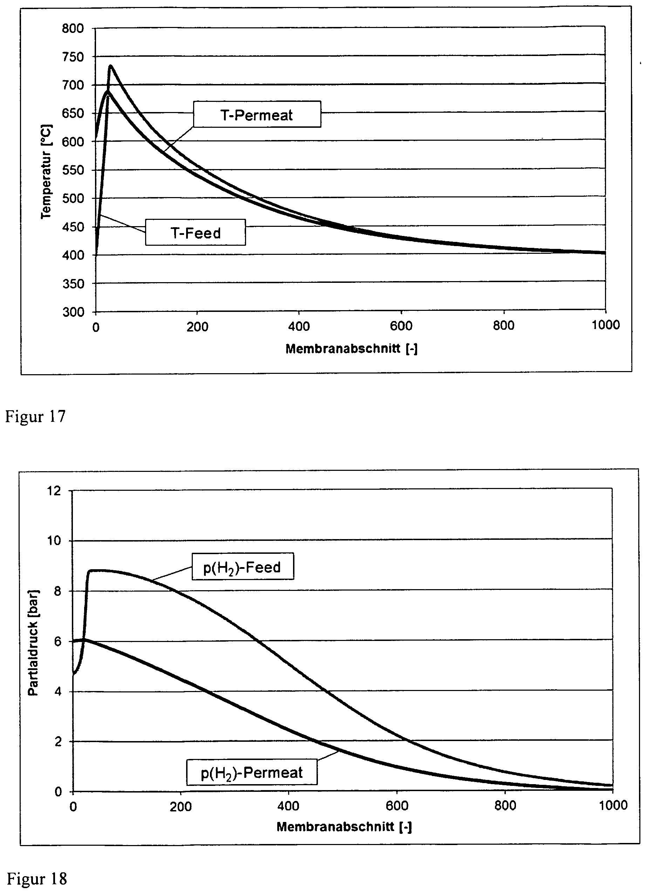

Nachfolgend wird die Erfindung anhand einiger Figuren und Tabellen näher erläutert. In den Figuren 1 bis 18 werden folgende Legendenzeichen durchgehend verwendet:

| | |
|---|---|
| A | = Vergasung |
| B | = Entstaubung als Gasreinigungsstufe |
| C | = Venturiwäscher/Entstickung als Gasreinigungsstufe |
| D | = Entschwefelung als Gasreinigungsstufe |
| S | = Wassergas Shiftstufe zur Umsetzung von CO in $CO_2$ und $H_2$ |
| Pre-S | = Hochtemperatur Pre-Shiftstufe |
| SMR | = Shift-Membran-Reaktor = WGS-MR |
| Q1, Q2, Q3 | = Sättiger/Quencher |
| LZA | = Luftzerlegungsanlage |
| GT | = Gasturbine |
| DT | = Dampfturbine |
| G | = Generator |
| $H_2$-Membran | = Hochtemperatur-Membraneinheit mit $H_2$-selektiver Membran |

In Figur 6 wird eine Ausführungsform des erfindungsgemäßen IGCC mit $CO_2$-Abtrennung und Speicherung, mit dem einstufigen Wassergas-Shift-Membranreaktor (WGS-MR) und der Rauchgasrückführung vorgestellt. Das Kraftwerk enthält dabei alle Vorteile der Rauchgasrückführung und des WGS-MR, welche sich sogar gegenseitig noch verstärken:

- Die realisierte erhöhte Triebkraft führt zu einer schnelleren $H_2$-Abtrennung, die wiederum einen erhöhten CO-Umsatz bewirkt, bzw. weniger Membranfläche benötig, und zur erhöhten Reinheit des Retentats beiträgt.

- Durch die große Spülgasmenge können auf beiden Seiten der Membran nahezu gleiche Drücke eingestellt werden, und die Triebkraft würde dennoch ausreichend hoch sein. Der Druck auf der Permeat-/Spülgasseite sollte dabei mindestens so hoch sein, dass für die weitere Verwendung (in der Gasturbine) keine weitere Kompression notwendig ist.
- das anfallende $CO_2$ liegt unter Druck vor.

Zudem treten durch die erfindungsgemäße Kombination in dem Kraftwerk einige vorteilhafte Synergieeffekte auf:

- Das als Spülgas eingesetzt Rauchgas ist gleichzeitig ein großer Wärmespeicher, um die Wärme der Shift-Reaktion nahezu komplett aufzunehmen. Somit ist vorteilhaft keine Pre-Shiftstufe mit anschließender Wärmeabfuhr über einen Wärmeaustauscher notwendig. Weniger Komponenten (eine Shiftstufe und ein Wärmeaustauscher weniger) bedeuten in der Regel eine einfachere Verfahrensführung. Ferner kann die Wärme aus der Shift-Reaktion im optimalen Fall vollständig an das Spülgas abgegeben und so im GuD-Prozess verwendet werden, anstatt nur zur Dampfproduktion (erhöhter Wirkungsgrad, wie im Folgenden beschrieben). Das erwärmte Spülgas hat einen kleineren Effekt zur Temperaturregulierung in der Brennkammer, wodurch mehr Spülgas zur Einstellung der Temperatur in der Brennkammer der Gasturbine notwendig wird:

  - dies erhöht weiter die Triebkraft,
  - ein erhöhter Massenstrom durch die Gasturbine und Abhitzekessel bedeutet gleichzeitig mehr Strom.

- Höhere Temperaturen in dem Wassergas-Shift-Membranreaktor führen zu einer Verlagerung des Gleichgewichts zur Eduktseite (weniger CO-Umsatz). Hier ist aber die Triebkraft, den Wasserstoff abzutrennen, so stark, dass dieser Effekt kompensiert werden und auch ein WGS-MR bei hohen Temperaturen betrieben werden kann, was sowohl einen erhöhten Wirkungsgrad bewirkt als auch den Einsatz von Mischleitern ermöglicht, die erst bei hohen Temperaturen (ab 500°C) funktionieren.
- Der $H_2$-Abtrenngrad soll maximal sein, um den Verlust von wertvollem Brenngas im Retentat zu vermeiden, welches dort nur aufwendig wieder gewonnen oder katalytisch nachverbrannt und zur Dampfproduktion genutzt werden kann. Der angestrebte $H_2$-Abtrenngrad ist hierbei > 95 mol-%, vorteilhaft sogar > 98 mol-%. Dabei wird auf die maximal erreichbare $H_2$-Menge bezogen, d. h. die die entstanden ist, wenn alles CO mittels Shiftreaktion zu H2 (+ $CO_2$) umgewandelt ist.
- Die Reinheit des Retentats soll möglichst maximiert werden. Dies bedeutet, dass im WGS-MR möglichst wenig weitere Verunreinigungen (zusätzlich zu den durch die Kohle und die LZA eingebrachten) eingebracht werden sollen. Die Verunreinigung geschieht (innerhalb des WGS-MR mit einer nicht ideal-selektiven Membran) mittels Rückpermeation von Stickstoff aus dem Spülgas. Die angestrebte Reinheit liegt beim erfindungsgemäßen Verfahren bei mindestens 90 mol-%, vorteilhaft sogar bei > 95 mol-% $CO_2$.

Nachfolgend werden unterschiedliche Simulationsrechnungen für ein erfindungsgemäßes IGCC mit CCS und WGS-MR und Rauchgasrückführung vorgestellt.

Dazu wurden zunächst für die folgenden Prozessparameter bestimmte Rahmenbedingungen zu Grunde gelegt, bzw. berücksichtigt:

- für das Synthesegas:

  Der Temperaturbereich vor WGS-MR hängt von der Auslegung, der verwendeten Reinigung (Kaltgas-, Warmgas-, Heißgasreinigung) und der Positionierung der Membran (vor oder nach einer Entschwefelung) ab. Realistische Werte liegen zwischen 200 °C und 600 °C.
  Der Druckbereich ist ebenfalls im gewissen Rahmen variabel. Übliche Vergaserdrücke liegen zwischen 20 und 40 bar, teilweise auch bei bis zu 80 bar. Der Druckverlust entlang der Reinigung kann 2 bis 10 bar ausmachen.

- für die Gasturbine:

  Der notwendige Druck des Brenngases ist abhängig vom Verdichterverhältnis. Unter Berücksichtigung eines notwendigen Überdrucks beträgt dieser in der Regel 17 bis 30 bar. Die Brenngaseintrittstemperatur liegt nach bisheriger Auslegung zwischen 150 °C und 350 °C. Es sind aber auch höhere Temperaturen, beispielsweise bis ca. 500 - 600 °C möglich.

- für die Membran:

Der Druckverlust der Membran ist auslegungsabhängig und beträgt typischerweise zwischen 0,5 und 5 bar. Das Spülgas vor der Membran sollte daher entsprechend 17 bis 30 bar plus einen etwaigen Druckverslust an der Membran aufweisen.

## 1. Beispielrechnung zur theoretischen Temperaturerhöhung im Reaktor

In der ersten Beispielrechnung wird die Temperaturerhöhung der Stoffströme im WGS-MR in Abhängigkeit des verwendeten Spülgases betrachtet. Die Zusammensetzung des Feedgases lautet wie folgt:

| | |
|---|---|
| CO: | 33,5 mol-% |
| $H_2$: | 19,1 mol-% |
| $H_2O$: | 44,5 mol-% ($H_2O/CO$ = 1,33) |
| Rest: | $CO_2$, $N_2$, Ar, Verunreinigungen |

Die Rechnung wurde unter folgenden Annahmen durchgeführt: Der WGS-MR wird im Gegenstrom betrieben und ist adiabat. Die Shiftreaktion läuft vollständig ab und der komplette Wasserstoff permeiert ins Spülgas. Außerdem wurde vereinfachend angenommen, dass die komplette durch die Shiftreaktion entstehende Wärmemenge durch das Spülgas sowie den permeierten Wasserstoff aufgenommen wird, so dass die Temperaturerhöhung nur dort stattfindet. Das Stoffmengenverhältnis bezieht sich auf das gesamte Spülgas (bestehend aus $N_2$ und $H_2O$) und dem maximal möglichen Wasserstoff, also der, der bei einem vollständigem CO-Umsatz entstehen würde. Der Wert ergibt sich aus der Prozessschaltung und ist ein Maß für die Triebkraft zur Wasserstoffpermeation.

An Hand der Simulationsrechnung wird deutlich, dass eine schwache Spülung (Stoffmengenverhältnis Spülgas/$H_2$ ~1), so wie in den ersten beiden Fällen mit (normalem oder gesättigtem) Spülgas aus einer LZA, die entstehende Wärme nicht gut abgeführt werden kann, und es somit innerhalb des Reaktors zu einer Temperaturerhöhung von mehr als 600 K kommen würde, was mit bisher bekannten Werkstoffen technisch nicht realisierbar ist. Bei der erfindungsgemäßen starken Spülung mit Rauchgas (Fälle 3 und 4), wäre demgegenüber nur eine moderate Temperaturerhöhung um 100 K zu erwarten.

Die Rechnung zeigt auch deutlich auf, dass ein Wassergas-Shift-Membranreaktor mit der bisherigen Spülung nicht ohne Pre-Shift und anschließender Wärmeabführung auskommen kann, während die hier vorgestellte erfindungsgemäße Ausführung ohne eine solche Pre-Shiftstufe auskommt.

Tabelle 1:

| | Stoffmengenverhältnis Spülgas/Wasserstoff | theoretische Temperaturerhöhung (bei max. CO-Umsatz und Wärmeaufnahme durch Spülgas) |
|---|---|---|
| N2-Spülgas aus Luftzerlegungsanlage | 0,9 | 787 K |
| gesättigtes N2-Spülgas aus Luftzerlegungsanlage | 1,1 | 608 K |
| Spülgas aus rezirkuliertem Rauchgas ($T_{Eingang}$ = 250 °C) | 5,9 | 121 K |
| Spülgas aus rezirkuliertem Rauchgas ($T_{Eingang}$ = 537 °C) | 8,1 | 83 K |

## 2. Beispielrechnung zur Membranauslegung

Zusätzlich wurden anhand eines Beispiels zwei Membranauslegungen für das erfindungsgemäße IGCC mit CCS und WGS-MR und Rauchgasrückführung durchgeführt. Die Membranfläche des WGS-MR wurde in beiden Fällen gleich groß gewählt (100.000 $m^2$, z.B.l = 1000 m x b = 100 m). Für das Kohlegas wurde eine realistische Zusammensetzung mit $H_2O/CO$-Verhältnis = 1,33 gewählt. Die Drücke für den eingehenden Feedstrom und den Spülgasstrom innerhalb des WGS-MR wurden identisch auf 25 bar festgesetzt.

Für die Simulation wurde eine ideale Selektivität der Membran für Wasserstoff angenommen. Der Wasserstofffluss wurde mit folgender Gleichung berechnet:

$$d\&_{H_2} = dA \cdot Q_{H_2} \cdot (p_{H_2,Feed} - p_{H_2,Permeat})$$

mit der Permeabilitätskonstante $Q_{H_2}$ = 0,5 $Nm^3 \cdot h^{-1} \cdot m^{-2} \cdot bar^{-1}$

Die Kinetik der Shiftreaktion wurde nach [*Podolski et al 1974.*] berechnet. Da das System im Gegenstrom verwendet wird, wurde die Lösung iterativ ermittelt. Für das Feedgas wurden dabei die folgenden Eingangs-Prozessgrößen festgelegt:

|  |  |
|---|---|
| CO: | 32,0 mol-% |
| $H_2$: | 20,0 mol-% |
| $H_2O$: | 46,0 mol-% ($H2O$/CO=1,33) |
| $CO_2$: | 0,4 mol-% |
| Rest: | $N_2$, Ar, Verunreinigungen |
| *k*&: | 4778 mol/s |
| P: | 25 bar |

Für die Feedgaszusammensetzung mit einer Eingangstemperatur von 500 °C wurde die Abtrennung innerhalb eines adiabatisch im Gegenstrom betriebenen WGS-MR für zwei Fälle berechnet (Feedstrom und Spülstrom jeweils im Gegenstrom):

1. Fall: Gesättigtes Spülgas aus einer Luftzerlegungsanlage mit
$T_{Ein}$ = 537 °C,

|  |  |
|---|---|
| *k*&: | 2728 mol/s (bestehend aus Stickstoff und Wasserdampf) |
| P: | 25 bar |

2. Fall: Spülgas aus Rauchgasrezirkulation mit
$T_{Ein}$ = 537 °C

|  |  |
|---|---|
| *k*&: | 20080 mol/s (bestehend aus Stickstoff und Wasserdampf) |
| P: | 25 bar |

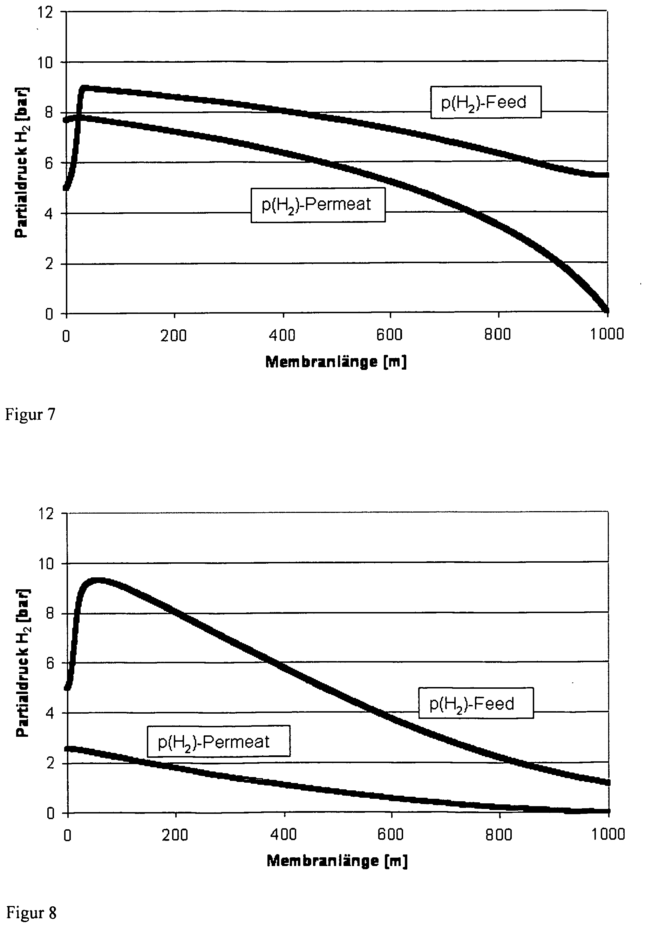

Die Ergebnisse für die Partialdrücke innerhalb des WGS-MR sind in den Figuren 7 und 8 dargestellt.

Im ersten Fall ergibt sich, dass bei der schwachen Spülung aus der Luftzerlegungsanlage nur 53,47 % des maximal möglichen $H_2$ aus dem Kohlegas abgetrennt wird. Maximal möglich bedeutet hier ein $H_2$-Strom, der entstehen würde, wenn der CO-Umsatz 100 % betragen würde.

Es ist zu erkennen, dass die Partialdruckdifferenz (= der Unterschied zwischen Feed- und Permeatdruck) zu gering ist, um eine ausreichende Triebkraft zu schaffen. Dadurch ist die Verschiebung des Gleichgewichts der Shiftreaktion hin zur Eduktseite ebenfalls so langsam, dass der positive Effekt des WGS-MR nur minimal ist.

Zudem ist zu erkennen, dass im ersten Teil des WGS-MR der $H_2$-Partialdruck auf der Feedseite sogar niedriger ist als auf der Permeatseite, so dass in diesem Bereich sogar eine Abreicherung des $H_2$ im Spülgas stattfindet, was zu einem reduzierten Abtrenngrad führt. Erst später, nachdem durch die Shiftreaktion der $H_2$-Partialdruck angestiegen ist, findet die eigentliche Abtrennung statt.

Die Rechnung belegt ferner, dass bei einer schwachen Spülung, die nur auf gesättigtem Stickstoff aus der LZA basiert (I.Fall), regelmäßig keine Druckgleichheit auf beiden Seiten vorliegen kann, da unter diesen Bedingungen keine ausreichende Permeation vorliegt. Es müsste also mit einem verminderten Druck gearbeitet werden, was eine anschließende Abkühlung und Nachverdichtung erforderlich machen würde.

Im Gegensatz dazu ist die Triebkraft im Fall 2 auf Grund der großen Spülmenge groß genug, um einen $H_2$-Abtrenngrad von 94,08 % zu erreichen. Außerdem ist ersichtlich, dass keine Rückpermeation am Anfang der Membran stattfindet und der Abtrenngrad zudem einfach durch eine Vergrößerung der Membranfläche erreicht werden könnte, wohingegen im Fall 1 eine erhöhte Membranfläche ebenfalls die Problematik der Rückpermeation erhöhen würde und somit der maximal mögliche Abtrenngrad begrenzt, bzw. nur mit erheblichem Aufwand erhöht werden könnte.

Es wurde ferner eine zweite Simulation durchgeführt, die den Einfluss des thermischen Massenstroms auf die Verfahrensführung verdeutlichen soll.

Allen Berechnungen wurden dabei die folgenden Rahmenbedingungen zu Grunde gelegt:

- identische Membran mit einer Fläche von 80.000 $m^2$ und einer Permeabilität von 1,37 $m^3$ $h^{-1}$ $m^{-2}$ $bar^{-1}$ sowie einer Wärmeübertragung von 100 W $m^{-2}$ $K^{-1}$,
- Feed mit 25 bar Druck, Eingangstemperatur ($T_{ein}$) 400 °C, Molenstrom 4500 mol/s mit der Zusammensetzung: 18,8 mol-% $H_2$, 0,3 mol-% $CO_2$, 44,1 mol-% $H_2O$, 33,9 mol-% CO, 2,9 mol-% Rest, so dass sich ein Molverhältnis von $H_2O$ zu CO von 1,3 ergibt,
- Spülgas mit 25 bar, Eingangstemperatur ($T_{ein}$) 400 °C, Spülgas bestehend aus 87 mol-% Stickstoff und Rest Wasserdampf, im Gegenstrom geführt.

Die Ergebnisse der Ausgangstemperaturen ($T_{aus}$) und Partialdrücke für das Retentat, bzw. das Permeat sind in den Figuren 9 und 10 (für Fall 3), 11 und 12 (für Fall 4), 13 und 14 (für Fall 5), 15 und 16 (für Fall 6) sowie 17 und 18 (für Fall 7) dargestellt. Die Parameter finden sich in Tabelle 2 zusammengefasst.

Tabelle 2:

| | Molenstrom Spülgas [mol/s] | Molverhältnis Spülgas/$H_{2,max}$ | Verhältnis thermische Massenströme: Spülgas/ Feed | Abtrenngrad $H_{2,max}$ [%] | Ausgangstemperatur für Retentat (R) und Permeat (P) [°C] | $T_{max}$ im WGS-MR [°C] |
|---|---|---|---|---|---|---|
| Fall 3 | 4500 | 1,1 | 0,52 | 54,6 | 627,7 (R) 565,7 (P) | 800 |
| Fall 4 | 16000 | 6,7 | 3,35 | 96,3 | 400,9 (R) 504,6 (P) | 600 |
| Fall 5 | 4783 | 2,0 | 1,00 | 76,1 | 442,7 (R) 656,6 (P) | 950 |
| Fall 6 | 5739 | 2,4 | 1,20 | 92,6 | 401,9 (R) 643,5 (P) | 750 |
| Fall 7 | 7174 | 3,0 | 1,50 | 95,6 | 401,0 (R) 608,7 (P) | 730 |

Im Fall 3 ergibt sich - ähnlich wie bei Fall 1 - ein $H_{2,max}$-Abtrenngrad von 54,6 %, die Ausgangstemperatur des abgereicherten $CO_2$ (Retentat) liegt bei 627 °C, und somit ca. 230 K höher als beim Eingang. Die Ausgangstemperatur des $H_2$/Spülgasgemisches (Permeat) liegt bei 565 °C, und damit ebenfalls deutlich über der Eingangstemperatur. Innerhalb des WGS-MR liegen nachteilig ansteigend hohe Werte zwischen 700 und knapp 800 °C vor (Figur 9). Diese hohe Wärmeentwicklung würde noch drastischer ausfallen, wenn das vorhandenen CO nahezu vollständig umgewandelt würde, was vorliegend nicht der Fall ist.

Das entsprechende Partialdruckprofil in Figur 10 zeigt den schnellen Anstieg des Partialdrucks im Feedstrom am Beginn des WGS-MR, der durch die Aufnahme des Spülgases moderat auf die Hälfte reduziert wird. Am Ausgang weist der Retentatstrom einen ähnlich hohen Wert wie am Anfang auf, während der Partialdruck im Spülgasstrom(Permeat) am Ausgang fast den maximalen Wert des Feedstroms innerhalb des WGS-MR annimmt.

Anders gestaltet sich der Temperaturverlauf für den Fall 4, bei dem auf Grund der gesteigerten Spülgasmenge dieses nunmehr die deutlich größere thermische Masse im Vergleich zum Feedstrom aufweist.

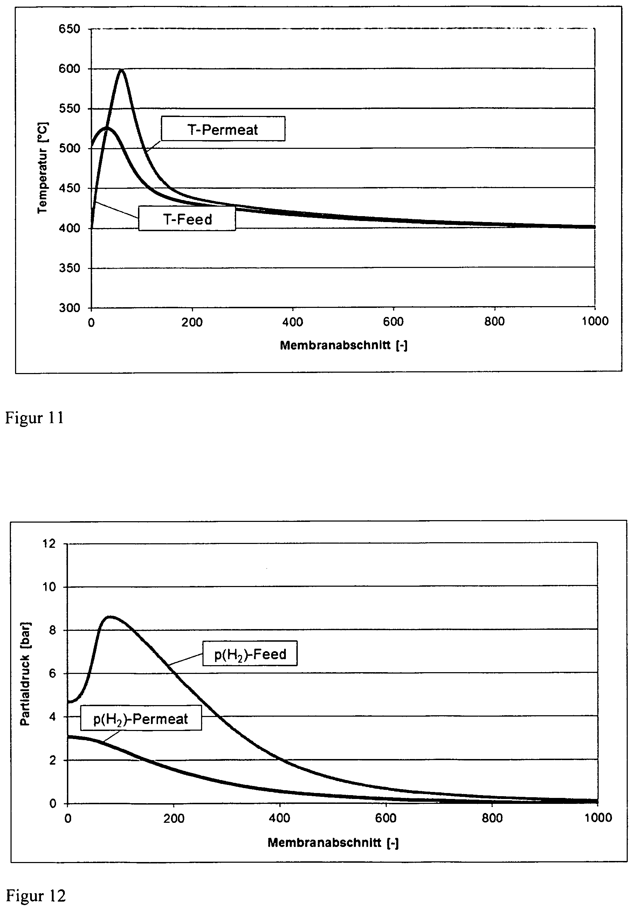

Für den Fall 4 ergibt sich - ähnlich wie bei Fall 2 - ein $H_{2,max}$-Abtrenngrad von 96,3 %, die Ausgangstemperatur des abgereicherten $CO_2$ (Retentat) liegt bei ca. 400 °C, und damit auf dem Eingangsniveau. Die Ausgangstemperatur des $H_2$/Spülgasgemisches (Permeat) liegt bei 506 °C, und damit nur um 100 K über der Eingangstemperatur. Innerhalb des WGS-MR liegen, vom Eingangsbereich abgesehen, überwiegend niedrige Temperaturen unterhalb von 450 °C vor (Figur 11), also nahezu auf Eingangsniveau.

Das entsprechende Partialdruckprofil in Figur 12 zeigt, verglichen mit Figur 10, einen nicht ganz so schnellen Anstieg des Partialdrucks am Beginn des WGS-MR, der anschließend relativ rasch auf sehr geringe Werte, die noch unterhalb der Eingangswerte liegen, abnimmt. Die Aufnahmekapazität des Spülgases ist so groß, dass erst gegen Ende des Membranabschnittes eine deutliche Partialdruckerhöhung sichtbar wird, die aber selbst am Ausgang noch unterhalb des Eingangswertes für den Feedstrom liegt.

Die Beispielfälle 1, bzw. 3 und 2, bzw. 4 zeigen jeweils die Grenzen des Verfahrens, mit einerseits wenig Spülgas (thermisches Massenstromverhältnis ~ 0,52) und andererseits viel Spülgas (thermisches Massenstromverhältnis ~ 3,35) auf. Die Fälle 5 bis 7 wurden für thermische Massenstromverhältnisse von 1,0, 1,2 und 1,5 simuliert, um das ungefähre Verhältnis festzulegen, ab dem die erfindungsgemäßen Vorteile besonders zum Tragen kommen.

**EP 2 520 786 B1**

Zu erkennen ist, dass die Abführung der bei der Shift entstehenden Wärme, bereits ab einem thermischen Massenstromverhältnis von 1,0 relativ gut gelingt, ab einem thermischen Massenstromverhältnis von mehr als 1,2 aber bereits fast vollständig verläuft. Dies wird durch die Ausgangstemperatur des Feedstromes (Retentat) deutlich, die kaum höher als die Eingangstemperatur liegt.

Sofern zusätzlich noch auf eine moderate Temperaturverteilung innerhalb des WGS-MR Wert gelegt wird, sollte das thermische Massenstromverhältnis auf mindestens größer als 1,2 eingestellt werden, vorteilhaft jedoch noch größer gewählt werden, um Temperaturen oberhalb von 750 °C zu vermeiden.

In der Anmeldung zitierte Literatur:

[*Kloster 1999*] R. Kloster, "Thermodynamische Analyse und Optimierung von Gas-/Dampfturbinen Kombikraftwerken mit integrierter Kohlevergasung", Fortschrittsbericht Nr. 409, VDI, Reihe 6, VDI-Verlag, Düsseldorf, 1999.

[*Bracht et al. 1997*] M. Bracht, P. T. Alderliesten, R. Kloster, R. Pruschek, G. Haupt, E. Xue, J. R. H. Ross, M. K. Koukou, N. Papayannakos, "Water gas shift membrane reactor for CO2 control in IGCC systems: techno-economic feasibility study", Energy Conversion and Management, Volume 38, Supplement 1, 1997, Seiten 159 - 164.

[*Kreutz et al. 2002*] T. G. Kreutz, R. H. Williams, R. H. Socolow, P. Chiesa, G. Lozza, "Production of Hydrogen and Electricity from Coal with CO2 Capture", prepared for the Sixth Greenhouse Gas Control Technologies Conference, Kyoto, Japan, September 30 - October 4, 2002.

[*Chiesa et al. 2005*] Paolo Chiesa, Tom Kreutz, Giovanni Lozza, "CO2 Sequestration From IGCC Power Plants by Means of Metallic Membranes", presented at ASME Turbo Expo 2005: Power for Land, Sea, and Air (GT2005) June 6-9, 2005 , Reno, Nevada, USA.

[*Carbo et al. 2006*] Michiel C. Carbo, Daniel Jansen, Wim G. Haije, Adrian H. M. Verkooijen, "Advanced Membrane Reactors for Fuel Decarbonisation in IGCC: H2 or CO2 separation? ", Presented at the Fifth Annual Conference on Carbon Capture and Sequestration, 8 - 11 May, 2006, Alexandria VA, U.S.A.

[*Podolski et al. 1974*] Walter F. Podolski, Young G. Kim, "Modeling the Water-Gas Shift Reaction", Ind. Eng. Chem. Process Des. Dev., 1974, 13 (4), pp 415-421.

**Patentansprüche**

1. Verfahren zum Betreiben eines IGCC-Kraftwerks mit den Schritten

   - einem Vergaser (A) wird wenigstens ein fester Brennstoff und Sauerstoff zugeführt,
   - das Brenngas wird wenigstens einem Gasreinigungsschritt (B, C, D, E) unterzogen,
   - das gereinigte Brenngas, umfassend CO und $H_2$, wird wenigstens einer Shiftstufe (SMR) zugeführt, wo eine Umwandlung des CO mit Wasserdampf überwiegend in $CO_2$ und $H_2$ erfolgt,
   - das $H_2$- und $CO_2$-haltige Brenngas wird über einen Membranfilter geleitet, welches $H_2$ selektiv aus dem Brenngas zumindest teilweise abtrennt, wobei ein Spülgas auf der Seite des Permeats zum Erreichen eines treibenden Potentials eingesetzt wird, und wobei als Spülgas für den Membranfilter ein Teil des in einem Gasturbinenprozess erzeugten Abgases eingesetzt wird,
   - das an Wasserstoff abgereicherte Brenngas wird einer $CO_2$-Konditionierung zugeführt,
   - der abgetrennte Wasserstoff wird zusammen mit dem Spülgas einer Brennkammer eines Gasturbinenprozesses zugeführt,
   **dadurch gekennzeichnet,**
   - **dass** die Umwandlung des CO mit Wasserdampf überwiegend in $CO_2$ und $H_2$ und die $H_2$-Abtrennung über den Membranfilter kombiniert in einem Wassergas-Shift-Membranreaktor (WGS-MR) durchgeführt werden, der einstufig und adiabat betrieben wird, und
   - **dass** für den WGS-MR ein thermisches Massenstromverhältnis von Spülgas zu Feed von wenigstens 1 eingestellt wird.

2. Verfahren zum Betreiben eines IGCC-Kraftwerks nach Anspruch 1, bei dem eine Protonen leitende Membran als Membranfilter im Wassergas-Shift-Membranreaktor eingesetzt wird.

3. Verfahren zum Betreiben eines IGCC-Kraftwerks nach Anspruch 1 oder 2, bei dem das der Permeatseite des Wassergas-Shift-Membranreaktors zugeführte Spülgas einen annähernd hohen Druck wie das Brenngas im Wassergas-Shift-Membranreaktor aufweist.

4. Verfahren zum Betreiben eines IGCC-Kraftwerks nach einem der Ansprüche 1 bis 3, bei dem das Spülgas direkt von der Brennkammer des Gasturbinenprozesses zur Permeatseite des Wassergas-Shift-Membranreaktors geleitet wird.

5. Verfahren zum Betreiben eines IGCC-Kraftwerks nach einem der Ansprüche 1 bis 4, bei dem das Spülgas vor der Einleitung in den Wassergas-Shift-Membranreaktor abgekühlt wird.

6. Verfahren zum Betreiben eines IGCC-Kraftwerks nach einem der Ansprüche 1 bis 5, bei dem das Spülgas vor der Einleitung in den Wassergas-Shift-Membranreaktor verdichtet wird.

7. Verfahren zum Betreiben eines IGCC-Kraftwerks nach einem der Ansprüche 1 bis 3, bei dem das Spülgas von einem dem Gasturbinenprozesses nachgeschalteten Dampfturbinenprozesses direkt zur Permeatseite des Wassergas-Shift-Membranreaktors geleitet wird.

8. Verfahren zum Betreiben eines IGCC-Kraftwerks nach einem der Ansprüche 1 bis 7, bei dem das an Wasserstoff abgereicherte Brenngas vor einer $CO_2$-Konditionierung zunächst verbrannt wird.

9. Verfahren zum Betreiben eines IGCC-Kraftwerks nach Anspruch 8, bei dem für die Verbrennung des abgereicherten Brenngases Sauerstoff eingesetzt wird.

10. Verfahren zum Betreiben eines IGCC-Kraftwerks nach Anspruch 9, bei dem für die Verbrennung des abgereicherten Brenngases Sauerstoff aus einer Luftzerlegungsanlage eingesetzt wird.

11. Verfahren zum Betreiben eines IGCC-Kraftwerks nach einem der Ansprüche 9 bis 10, bei dem der Sauerstoff für den Vergaser und/oder die Verbrennung des abgereicherten Brenngases über wenigstens eine Sauerstoff leitende Membran gewonnen wird.

12. IGCC-Kraftwerk umfassend,

    - einen Vergaser zur Vergasung eines festen Brennstoffs,
    - ein Mittel zur Bereitstellung von Sauerstoff für den Vergaser,
    - wenigstens eine dem Vergaser nachgeschaltete Wassergas-Shiftstufe zur Umwandlung von CO und Wasserdampf in $CO_2$ und Wasserstoff,
    - wenigstens eine dem Vergaser nachgeschaltete Gasreinigungsstufe,
    - einen, dem Vergaser nachgeschalteten, Membranfilter mit einer Wasserstoffselektiven Membran,
    - wenigstens ein Mittel zur Bereitstellung von Spülgas für die Permeatseite des Membranfilters sowie
    - eine Gasturbine mit einer Brennkammer, wobei eine Leitung von der Permeatseite des Membranfilters zu der Brennkammer der Gasturbine führt,
    **dadurch gekennzeichnet,**
    - **dass** die komplette Wassergas-Shiftstufe und der Membranfilter in einem einstufig und adiabat betreibbaren Wassergas- Shift-Membranreaktor (WGS-MR) kombiniert vorliegen,
    - **dass** das Mittel zur Bereitstellung des Spülgases die Brennkammer der Gasturbine ist, und
    - **dass** eine Spülgasleitung zwischen der Abgasleitung der Gasturbine und der Permeatseite des Wassergas-Shift-Membranfilters angeordnet ist, und dass
    - zwischen der Permeatseite des Wassergas- Shift-Membranreaktors und der Brennkammer der Gasturbine weder ein Wärmetauscher noch ein Nachverdichter vorgesehen sind.

13. IGCC-Kraftwerk nach Anspruch 12, bei dem die beiden Leitungen zwischen der Permeatseite des Membranfilters und der Brennkammer der Gasturbine als Kreislaufführung ausgestaltet sind.

14. IGCC-Kraftwerk nach einem der Ansprüche 12 bis 13, umfassend einen der Gasturbine nachgeschalteten Abhitzekessel für eine Dampfturbine, wobei die Spülgasleitung zwischen dem Abhitzekessel der Dampfturbine und der Permeatseite des Wassergas-Shift-Membranfilters vorgesehen ist.

15. IGCC-Kraftwerk nach einem der Ansprüche 12 bis 14 mit einer der Retentatseite des Wassergas-Shift-Membranreaktors nachgeschalteten Verbrennungskammer.

**Claims**

1. Process for operating an IGCC power plant with the steps

    - at least one solid fuel and oxygen are fed to a gasifier (A),
    - the fuel gas undergoes at least one gas purification step (B, C, D, E),
    - the purified fuel gas, comprising CO and $H_2$, is fed to at least one shift stage (SMR) where a conversion of the CO with steam primarily into $CO_2$ and $H_2$ is effected,
    - the fuel gas containing $H_2$ and $CO_2$ is conducted across a membrane filter which selectively separates at least some of the $H_2$ from the fuel gas, in which a purge gas on the permeate side is used in order to achieve a driving potential, and in which some of the exhaust gas produced in a gas turbine process is used as the purge gas for the membrane filter,
    - the hydrogen depleted fuel gas is fed to $CO_2$ conditioning,
    - the separated hydrogen together with the purge gas is fed to the combustor of a gas turbine process,
    **characterised in that**,
    - the conversion of the CO with steam primarily into $CO_2$ and $H_2$ and the $H_2$ separation are effected via the membrane filter combined in a water gas shift membrane reactor (WGS MR), which is operated on a one stage and adiabatic basis and
    - a thermal mass flow rate of the purge gas is adjusted to a feed of at least 1 for the WGS MR.

2. Process for operating an IGCC power plant according to claim 1, in which a proton conducting membrane is used as the membrane filter in the water gas shift membrane reactor.

3. Process for operating an IGCC power plant according to claim 1 or 2, in which the purge gas fed to the permeate side of the water gas shift membrane reactor has a pressure which is approximately as high as that of the fuel gas in the water gas shift membrane reactor.

4. Process for operating an IGCC power plant according to one of claims 1 to 3, in which the purge gas is conducted directly from the combustor of the gas turbine process to the permeate side of the water gas shift membrane reactor.

5. Process for operating an IGCC power plant according to one of claims 1 to 4, in which the purge gas is cooled prior to being introduced into the water gas shift membrane reactor.

6. Process for operating an IGCC power plant according to one of claims 1 to 5, in which the purge gas is compressed prior to being introduced into the water gas shift membrane reactor.

7. Process for operating an IGCC power plant according to one of claims 1 to 3, in which the purge gas is conducted from a steam turbine process downstream of the gas turbine process directly to the permeate side of the water gas shift membrane reactor.

8. Process for operating an IGCC power plant according to one of claims 1 to 7, in which the hydrogen depleted fuel gas is first of all combusted prior to $CO_2$ conditioning.

9. Process for operating an IGCC power plant according to claim 8, in which oxygen is used for the combustion of the depleted fuel gas.

10. Process for operating an IGCC power plant according to claim 9, in which oxygen from an air separation unit is used for the combustion of the depleted fuel gas.

11. Process for operating an IGCC power plant according to one of claims 9 to 10, in which the oxygen for the gasifier and / or the combustion of the depleted fuel gas is obtained via at least one oxygen conducting membrane.

12. IGCC power plant comprising,

    - a gasifier for the gasification of a solid fuel,
    - a means for supplying oxygen for the gasifier,
    - at least one water gas shift stage downstream of the gasifier for converting CO and steam into $CO_2$ and hydrogen,

- at least one purification stage downstream of the gasifier,
- a membrane filter with a hydrogen selective membrane downstream of the gasifier,
- at least one means for supplying purge gas for the permeate side of the membrane filter as well as
- a gas turbine with a combustor, in which a line leads from the permeate side of the membrane filter to the combustor of the gas turbine,
**characterised in that**,
- the entire water gas shift stage and the membrane filter are present combined in a water gas shift membrane reactor (WGS MR) which can be operated on a one stage and adiabatic basis,
- the means for supplying the purge gas is the combustor of the gas turbine, and
- a purge gas line is arranged between the exhaust gas line of the gas turbine and the permeate side of the water gas shift membrane filter, and
- neither a heat exchanger nor a booster compressor are envisaged between the permeate side of the water gas shift membrane reactor and the combustor of the gas turbine.

13. IGCC power plant according to claim 12, in which both lines between the permeate side of the membrane filter and the combustor of the gas turbine are formed as a circulating system.

14. IGCC power plant according to one of claims 12 to 13, comprising a waste heat boiler for a steam turbine, which is downstream of the gas turbine, in which the purge gas line is envisaged between the waste heat boiler of the steam turbine and the permeate side of the water gas shift membrane filter.

15. IGCC power plant according to one of claims 12 to 14 with a combustor downstream of the retentate side of the water gas shift membrane reactor.

## Revendications

1. Procédé servant à faire fonctionner une centrale électrique CCGI, avec les étapes suivantes

   - au moins un combustible solide et de l'oxygène sont amenés à un gazéificateur (A),
   - le gaz combustible est soumis à au moins étape d'épuration de gaz (B, C, D, E),
   - le gaz combustible épuré comprenant du CO et du $H_2$ est amené à au moins un étage de conversion (SMR), où une conversion du CO avec de la vapeur d'eau majoritairement en $CO_2$ et en $H_2$ est effectuée,
   - le gaz combustible contenant du $H_2$ et du $CO_2$ est acheminé par l'intermédiaire d'un filtre à membrane, qui sépare au moins en partie de manière sélective du $H_2$ du gaz combustible, dans lequel un gaz de balayage est utilisé du côté du perméat afin d'obtenir un potentiel d'entraînement et dans lequel une partie des gaz d'échappement produits dans un processus de turbine à gaz est utilisée en tant que gaz de balayage pour le filtre à membrane,
   - le gaz combustible enrichi en hydrogène est amené à un système de conditionnement de $CO_2$,
   - l'hydrogène séparé est amené conjointement avec le gaz de balayage à une chambre de combustion d'un processus de turbine à gaz,
   **caractérisé en ce**
   - **que** la conversion du CO avec de la vapeur d'eau majoritairement en $CO_2$ et en $H_2$ et la séparation de $H_2$ par l'intermédiaire du filtre à membrane sont effectuées de manière combinée dans un réacteur de conversion de gaz à l'eau à membrane (WGS-MR), qui fonctionne en une étape et de manière adiabatique, et
   - **qu'**un rapport de débit massique thermique entre le gaz de balayage et l'alimentation d'au moins 1 est réglé pour le WGS-MR.

2. Procédé servant à faire fonctionner une centrale électrique CCGI selon la revendication 1, dans lequel une membrane acheminant des protons est utilisée en tant que filtre à membrane dans le réacteur de conversion de gaz à l'eau à membrane.

3. Procédé servant à faire fonctionner une centrale électrique CCGI selon la revendication 1 ou 2, dans lequel le gaz de balayage amené au côté perméat du réacteur de conversion de gaz à l'eau à membrane présente une pression approximativement élevée comme le gaz combustible dans le réacteur de conversion de gaz à l'eau à membrane.

4. Procédé servant à faire fonctionner une centrale électrique CCGI selon l'une quelconque des revendications 1 à 3, dans lequel le gaz de balayage est acheminé directement depuis la chambre de combustion du processus de turbine à gaz vers le côté perméat du réacteur de conversion de gaz à l'eau à membrane.

5. Procédé servant à faire fonctionner une centrale électrique CCGI selon l'une quelconque des revendications 1 à 4, dans lequel le gaz de balayage est refroidi avant d'être introduit dans le réacteur de conversion de gaz à l'eau à membrane.

6. Procédé servant à faire fonctionner une centrale électrique CCGI selon l'une quelconque des revendications 1 à 5, dans lequel le gaz de balayage est comprimé avant d'être introduit dans le réacteur de conversion de gaz à l'eau à membrane.

7. Procédé servant à faire fonctionner une centrale électrique CCGI selon l'une quelconque des revendications 1 à 3, dans lequel le gaz de balayage est acheminé depuis un processus de turbine à vapeur installé en aval du processus de turbine à gaz directement vers le côté perméat du réacteur de conversion de gaz à l'eau à membrane.

8. Procédé servant à faire fonctionner une centrale électrique CCGI selon l'une quelconque des revendications 1 à 7, dans lequel le gaz combustible enrichi en hydrogène est d'abord brûlé avant un conditionnement de $CO_2$.

9. Procédé servant à faire fonctionner une centrale électrique CCGI selon la revendication 8, dans lequel de l'oxygène est utilisé pour la combustion du gaz combustible enrichi.

10. Procédé servant à faire fonctionner une centrale électrique CCGI selon la revendication 9, dans lequel de l'oxygène provenant d'une installation de séparation d'air est utilisé pour la combustion du gaz combustible enrichi.

11. Procédé servant à faire fonctionner une centrale électrique CCGI selon l'une quelconque des revendications 9 à 10, dans lequel l'oxygène pour le gazéificateur et/ou pour la combustion du gaz combustible enrichi est obtenu par l'intermédiaire d'au moins une membrane acheminant de l'oxygène.

12. Centrale électrique CCGI comprenant

- un gazéificateur servant à gazéifier un combustible solide,
- un moyen servant à fournir de l'oxygène pour le gazéificateur,
- au moins un étage de conversion de gaz à l'eau installé en aval du gazéificateur servant à convertir du CO et de la vapeur d'eau en $CO_2$ et en hydrogène,
- au moins un étage d'épuration de gaz installé en aval du gazéificateur,
- un filtre à membrane installé en aval du gazéificateur, avec une membrane sélective d'hydrogène,
- au moins un moyen servant à fournir du gaz de balayage pour le côté perméat du filtre à membrane, ainsi
- qu'une turbine à gaz avec une chambre de combustion, dans laquelle un conduit mène depuis le côté perméat du filtre à membrane vers la chambre de combustion de la turbine à gaz,
**caractérisée en ce**
- **que** l'étage de conversion de gaz à l'eau complet et le filtre à membrane sont présents et combinés dans un réacteur de conversion de gaz à l'eau à membrane (WGS-MR) pouvant fonctionner en une étape et de manière adiabatique,
- **que** le moyen servant à fournir le gaz de balayage est la chambre de combustion de la turbine à gaz, et
- **qu'**un conduit de gaz de balayage est disposé entre le conduit de gaz d'échappement de la turbine à gaz et le côté perméat du filtre de conversion de gaz à l'eau à membrane, et que
- ni un échangeur de chaleur ni un compresseur ultérieur ne sont prévus entre le côté perméat du réacteur de conversion de gaz à l'eau à membrane et la chambre de combustion de la turbine à gaz.

13. Centrale électrique CCGI selon la revendication 12, dans laquelle les deux conduits entre le côté perméat du filtre à membrane et la chambre de combustion de la turbine à gaz sont configurés sous la forme d'un système de recirculation.

14. Centrale électrique CCGI selon l'une quelconque des revendications 12 à 13, comprenant une chaudière de récupération installée en aval de la turbine à gaz pour une turbine à vapeur, dans laquelle le conduit de gaz de balayage est prévu entre la chaudière de récupération de la turbine à vapeur et le côté perméat du filtre de conversion de gaz à l'eau à membrane.

15. Centrale électrique CCGI selon l'une quelconque des revendications 12 à 14 avec une chambre de combustion installée en aval du côté rétentat du réacteur de conversion de gaz à l'eau à membrane.

Figur 1 [aus *Kloster*]

Figur 2

Figur 3

Figur 4

Figur 5

Figur 6

Figur 7

Figur 8

Figur 9

Figur 10

Figur 11

Figur 12

Figur 13

Figur 14

Figur 15

Figur 16

Figur 17

Figur 18

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008011771 A1
- WO 2010031366 A2
- US 20070072949 A1

- DE 102008002963 A1
- US 4936869 A

**In der Beschreibung aufgeführte Nicht-Patentliteratur**

- Thermodynamische Analyse und Optimierung von Gas-/Dampfturbinen Kombikraftwerken mit integrierter Kohlevergasung. **R. KLOSTER.** Fortschrittsbericht. VDI-Verlag, 1999
- **M. BRACHT ; P. T. ALDERLIESTEN ; R. KLOSTER ; R. PRUSCHEK ; G. HAUPT ; E. XUE ; J. R. H. ROSS ; M. K. KOUKOU ; N. PAPAYANNAKOS.** Water gas shift membrane reactor for CO2 control in IGCC systems: techno-economic feasibility study. *Energy Conversion and Management,* 1997, vol. 38 (1), 159-164
- **T. G. KREUTZ ; R. H. WILLIAMS ; R. H. SOCOLOW ; P. CHIESA ; G. LOZZA.** Production of Hydrogen and Electricity from Coal with CO2 Capture. *Sixth Greenhouse Gas Control Technologies Conference,* 04. Oktober 2002

- **PAOLO CHIESA ; TOM KREUTZ ; GIOVANNI LOZZA.** CO2 Sequestration From IGCC Power Plants by Means of Metallic Membranes. *ASME Turbo Expo 2005: Power for Land, Sea, and Air (GT2005),* 06. Juni 2005
- **MICHIEL C. CARBO ; DANIEL JANSEN ; WIM G. HAIJE ; ADRIAN H. M. VERKOOIJEN.** Advanced Membrane Reactors for Fuel Decarbonisation in IGCC: H2 or CO2 separation?. *Presented at the Fifth Annual Conference on Carbon Capture and Sequestration,* 08. Mai 2006
- **WALTER F. PODOLSKI ; YOUNG G. KIM.** Modeling the Water-Gas Shift Reaction. *Ind. Eng. Chem. Process Des. Dev.,* 1974, vol. 13 (4), 415-421